(19)

Europäisches
Patentamt

European
Patent Office

Office européen
des brevets

(11) **EP 4 462 348 A1**

(12) **EUROPEAN PATENT APPLICATION**

(43) Date of publication:
**13.11.2024  Bulletin 2024/46**

(21) Application number: **23172394.1**

(22) Date of filing: **09.05.2023**

(51) International Patent Classification (IPC):
**G06T 1/00** *(2006.01)*       **G09C 5/00** *(2006.01)*

(52) Cooperative Patent Classification (CPC):
**G06T 1/0028; G09C 5/00;** G06T 2201/0051;
G06T 2201/0081; H03M 13/1515; H03M 13/152

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nagravision Sàrl
1033 Cheseaux-sur-Lausanne (CH)**

(72) Inventor: **GAGLIARDONI, Tommaso
1033 Cheseaux-sur-Lausanne (CH)**

(74) Representative: **Mewburn Ellis LLP
Aurora Building
Counterslip
Bristol BS1 6BX (GB)**

(54) **METHOD OF EMBEDDING DATA IN A VIRTUAL OBJECT**

(57)     A computer-implemented method of embedding data in a virtual object is provided. The virtual object is generated from a mesh of polygons. The polygons comprise edges meeting at vertices, each of the vertices being represented by initial coordinates in 3D space. The computer-implemented method comprises: receiving the initial coordinates of the vertices of the virtual object; receiving the data to be embedded in the virtual object; determining a respective set of spatial adjustments for the initial coordinates of a plurality of the vertices. The set of spatial adjustments corresponds to the data being embedded. The method further comprises: adjusting the initial coordinates of the plurality of the vertices by the respective set of spatial adjustments, to generate adjusted coordinates of the vertices.

Fig. 1a

EP 4 462 348 A1

# Description

## *Field of the Invention*

The present invention relates to a computer-implemented method of embedding data in a virtual object and a computer-implemented method for extracting embedded data from a virtual object. Corresponding systems, computer programs, and computer-readable storage media are also provided.

## *Background*

Virtual immersive 3D-rendered environments ("environments") are becoming more ubiquitous as computing and gaming technology improve, and remote working becomes more common. In a virtual environment, users typically interact with other users or resources using a digital 3D model of an object or persona (e.g., an avatar). Additionally, users may be able to modify the environment itself by, e.g., creating or editing the appearance of other 3D objects. In some examples, users may wish to export virtual objects or avatars outside of the environment. Moreover, the development of the Metaverse is driving an increasing desire for users to transfer virtual objects and avatars between environments.

Another issue associated with virtual environments is that it can be difficult to enforce copyright of artistic works. For example, a user may wish to protect the appearance of their avatar against impersonation. In another example, in cases where the environment supports NFTs (non-fungible tokens), a user may wish to protect a digital asset forming the subject of their NFT against cloning (an NFT may attest to the provenance of expensive objects such as 3D clothes, jewellery, rare figurines, etc). Environments typically deploy technology to detect and remove counterfeits of protected digital objects. However, these protections are not able to detect counterfeits of protected digital objects which have been exported from the environment or which are being shared in external media which is outside of the environment's control. For example, a malicious user could grab a screenshot or video recording of another user's 3D model, edit the 3D model to make it fit to a different situation, and then post the edited model on social media. Analogously, a malicious user could copy the 3D model of another user's NFT and embed it within the malicious user's avatar in a different environment which is not connected to the original environment.

A traditional approach used against digital piracy typically involves embedding hidden and encrypted digital metadata within the data packet which comprises the virtual object. The use of such metadata, however, increases the bandwidth of the virtual object (this could be an issue e.g., in the case of gas-constrained NFT objects). This metadata might also be removed ("flattened") from the virtual object if the object is exported to a different format which does not contain metadata. For example, a virtual object which is copied by screenshotting, recording, printing, etc. would not be protected by metadata.

The present invention has been devised in light of the above considerations.

## *Summary of the Invention*

Broadly speaking, the present invention provides a computer-implemented method of embedding data within a virtual object by applying small spatial perturbations to the shape of the virtual object. Accordingly, the embedded data is transferable between platforms and is not detectable without having prior knowledge of the original virtual object.

A first aspect of the present invention provides a computer-implemented method of embedding data in a virtual object, the virtual object being generated from a mesh of polygons, the polygons comprising edges meeting at vertices, each of the vertices being represented by initial coordinates in 3D space, wherein the computer-implemented method comprises:

> receiving the initial coordinates of the vertices of the virtual object;
> receiving the data to be embedded in the virtual object;
> determining a respective set of spatial adjustments for the initial coordinates of a plurality of the vertices, the set of spatial adjustments corresponding to the data being embedded; and
> adjusting the initial coordinates of the plurality of the vertices by the respective set of spatial adjustments, to generate adjusted coordinates of the vertices.

Advantageously, by embedding the data as spatial adjustments to the virtual object, the embedded data may be undetectable to other users who do not have prior knowledge of the original virtual object. For example, potential malicious users who copy the virtual object cannot detect or remove the embedded data from the virtual object.

Additionally, by embedding the data as spatial adjustments, the data may be preserved if the virtual object is shared across platforms or reformatted. For example, if the virtual object is copied, recorded, printed etc, the data may still be extractable because the data is embedded in the appearance (i.e., the mesh coordinates) of the virtual object as opposed to being embedded in the surrounding data packet or metadata which may be lost when the virtual object is exported.

The embedded data may be used as a hidden watermark to identify and protect potentially stolen virtual objects across platforms thereby helping to protect the virtual object against copyright infringement or theft. Additionally, legitimate recipients of the virtual object can have more confidence that the virtual object is authentic and has come from a legitimate source.

The computer implement method of the first aspect may be performed by a trusted source or owner of a virtual object. In some examples the computer implemented method may be performed as a service by a third party. For example, an owner of a virtual object may provide the virtual object to the third party for watermarking. The third party may then embed data (i.e., a watermark) in the virtual object and return the, now watermarked, virtual object to the owner.

The virtual object may be a computer-generated object that can be stored, edited, shared and duplicated digitally. For example, the computer-generated object may be a digital asset or model which is represented by 3D coordinates and stored in digital memory. The virtual object (which may also be referred to as a 3D model) may be renderable by a graphics engine for display on a screen. For example, the virtual object may be displayed on a screen as a 2D graphical image.

The virtual object may be associated with a virtual environment. For example, the virtual object may be housed inside, or exported from a particular a virtual environment.

The virtual object may be an avatar, a digital item or 3D digital art, etc. For example, a user may create the virtual object using computer aided design (CAD) or a user may buy the virtual object from a seller within a virtual environment (e.g., as part of a game).

In 3D computer graphics and solid modelling, a polygon mesh may be a collection of vertices, edges and faces that define the shape of a polyhedral object. Therefore, the mesh of polygons may also be described as a wire-frame model. The faces of the polygons may comprise triangles (triangle mesh), quadrilaterals (quads), or other simple convex polygons (n-gons). However, the virtual object may also be generated from concave polygons, or even polygons with holes.

The virtual object may be generated from the mesh of polygons by a rendering engine. For example, the rendering engine may be configured to receive the coordinates of vertices of the polygons, generate edges connecting the vertices, and create a surface around the resulting mesh for display on a screen or in virtual reality.

The virtual object may be stored in memory as an array of coordinates forming the vertices of the polygons. However, in some examples, the virtual object may be stored in other digital forms. For example, the virtual object may be represented as parametric surfaces mathematically described by curves and surfaces (Non-Uniform Rational B-Splines/NURBS), or as geometric solids (Constructive Solid Geometry/CSG) or by boundary representations (B-reps). In these examples, the computer-implemented method may comprise: receiving a virtual object; and creating a mesh of polygons, the mesh of polygons being configured describe the shape of the virtual object.

The vertices of the mesh of polygons may be represented by their relative positions using a Cartesian coordinate system. For example, the initial coordinates representing each vertex may comprise three values (i.e., *x, y, z*), each value indicating the location of the vertices in a respective dimension, the three dimensions optionally being orthogonal. However, other coordinate systems may be used, such as cylindrical polar coordinates, and spherical polar coordinates.

When each initial coordinate comprises three values, determining the respective spatial adjustments may comprise determining spatial adjustments for at least one of the values in each set of initial coordinates. In some examples, adjustments may be determined for two or for all three dimensions of each coordinate being adjusted.

The computer implemented method may comprise rendering the virtual object according to the adjusted coordinates of the vertices. Therefore, the adjusted virtual object may be displayed as a graphical image on a screen or in virtual reality, etc.

The virtual object may be a virtual object in a 3D virtual environment. For example, the virtual object may have been created or bought inside a host environment such as in a game or a virtual reality environment.

The computer implemented method may comprise exporting the adjusted virtual object outside of the host environment. Since the embedded data is embedded in the composition of the wire frame of the virtual object (i.e., the appearance of the virtual object) the embedded data can be preserved when the virtual object is exported outside of the host environment.

In some examples, the virtual environment may be a three-dimensional design environment and the virtual object may correspond to a physical object to be manufactured. For example, the virtual object may be configured to be printed into a physical object using 3D printing or another form of additive manufacturing. In this case, the computer-implemented method may comprise: generating a control signal comprising instructions for a manufacturing device to fabricate a physical object corresponding to the virtual object. The instructions may comprise the adjusted coordinates of the vertices. The method may comprise transmitting the control signal to the manufacturing device.

The data may include a unique identifier corresponding to the virtual object. For example, the unique identifier may be a code or a reference number which is assigned to the virtual object. Embedding the unique identifier in the virtual object enables the virtual object to be fingerprinted for later identification. Therefore, illegitimate copies of the virtual object may be identified because they may contain the same unique identifier. In other words, the unique identifier may be used to watermark the virtual object. By embedding the unique identifier in the virtual object according to the method of the first aspect, the watermark is able to persist when the virtual object is exported outside of the host environment.

In some examples, the data may include an identifier, signature or watermark which is associated with e.g., a provider of the virtual object. For example, a name or reference number of a certification authority or a seller of virtual objects may be embedded in the virtual object according to the described method as an invisible watermark. Therefore, potential counterfeit virtual objects may be assessed to determine if they contain the invisible watermark and therefore are authentic.

The spatial adjustments may be perturbations of variable sizes for offsetting the coordinates of the vertices. The data to be embedded in the virtual object may be encoded (as described below) so that it is represented by a sequence of bits or numbers. The size of each spatial adjustment may correspond to one of more bits or numbers of the encoded data.

The magnitude of the spatial adjustments may be smaller than a predetermined threshold. The predetermined threshold may be a maximum adjustment size for the spatial adjustments. By limiting the size of the spatial adjustments, the overall shape of the virtual object may be maintained so that the appearance of the virtual object is unaffected by the data being embedded. The embedded data may be undetectable without prior knowledge of the data's presence and/or the original virtual object.

For each vertex, of the virtual object, the magnitude of the spatial adjustment may be defined as the Euclidean distance between the original coordinates of the vertex and the adjusted coordinates of the vertex. For each vertex, the difference (i.e., Euclidean distance) between each original coordinate and each adjusted coordinate for each vertex may be less than the predetermined threshold.

The predetermined threshold for the spatial adjustments may correspond to an adjustment amount that is undetectable by the human eye. In other words, the magnitude of the spatial adjustments (and the predetermined threshold) may be configured to be indistinguishable from or appear as random spatial noise. The adjusted virtual object may then be compared to a known baseline later to extract the apparently random spatial noise. The extracted "noise" may then be decoded, and optionally decrypted, to reconstruct the embedded data. Accordingly, the spatial adjustments may be undetectable to the human eye when the object is rendered as a graphical image. In other words, the maximum size of the spatial adjustments may be based on an amount of spatial noise that can be applied to a virtual object without changing its overall appearance.

In some examples, the predetermined threshold for the spatial adjustments may be based on a maximum size of the virtual object. For example, the maximum size of the spatial adjustments may be 0.1 %-5%, more preferably 0.5%- 4%, more preferably 1%-3% of the maximum size of the entire virtual object.

If the virtual object is represented by 3D cartesian coordinates (x, y, z) then a maximum size of the virtual object may be defined for each of the x, y and z directions. Therefore, a predetermined maximum threshold for the spatial adjustments may be defined for each of the 3D cartesian coordinates (x, y, z). For example, the maximum size of spatial adjustments in the x direction may be 1%-3% of a maximal width of the virtual object in the x direction, the maximum size of spatial adjustments in the y direction may be 1%-3% of a maximal width of the virtual object in the y direction, and the maximum size of spatial adjustments in the z direction may be 1%-3% of a maximal width of the virtual object in the z direction.

In some examples, the predetermined maximum threshold for the spatial adjustments may be based on a spatial resolution of the virtual object.

Additionally, the spatial adjustments may have a minimum size. The minimum size of the spatial adjustments may be based on a spatial resolution of the virtual object.

The spatial resolution may be application or hardware specific. For example, the spatial resolution may be defined by a number of pixels per unit length on a screen that can be resolved. The spatial resolution may be defined by the resolution of a screen that the virtual object or a virtual environment is configured to support. In other examples, the spatial resolution may be defined by a number of polygons or vertices used to define a 3D object. For example, if a virtual object is configured to be rendered on a display with resolution of 1920x1080 pixels (e.g. 1080p) then a minimum size of the spatial adjustments may correspond to 1 pixel. The predetermined maximum threshold for the spatial adjustments may correspond to between e.g., 2 to 10 pixels.

The computer implemented method may further comprise: encrypting the data to be embedded. For example, the data to be embedded may be a bitstring containing watermarking information such as an identifier or an author name etc or confidential information to be communicated securely. The bitstring may be augmented by a cryptographic authentication layer (e.g., using Hash-based message authentication codes (HMAC), or a digital signature, etc) and then encrypted to appear like random bits. The encryption algorithm for encrypting the bitstring may be a block cipher with authentication. For example, AES (Advanced Encryption Standard) in GCM (Galois/Counter Mode) mode. A cryptographic key associated with the encryption algorithm may be provided for encrypting and decrypting the embedded data.

By encrypting the data to be embedded in the virtual object, the data may be hidden from recipients of the virtual object. This is because the spatial adjustments corresponding to the encrypted data would appear as random noise to recipients who do not have the cryptographic key. In this way, hidden messages may be embedded in the virtual object without being detectable.

In some examples, the cryptographic key may be a symmetric key wherein the key that was used to encrypt the data may also be used to decrypt the data.

In other examples, the data may be encrypted and decrypted using a key pair comprising a private key and a public key. For example, the embedded data may be used to digitally sign the virtual object. In this case, a private key may be used to encrypt the data for embedding in the virtual object. A recipient of the virtual object may then use a public key which is associated with a source of the virtual object to decrypt or verify the data embedded in the virtual object. If the data is successfully verified using the public key, then the recipient of the virtual object can have confidence that the virtual object is authentic.

The computer implemented method may comprise encoding the data to be embedded in the virtual object. For example, the data may be encoded into a number sequence, wherein each number in the sequence corresponds to a spatial perturbation of the virtual object.

In some examples, the data may be encoded using an error-correction code. The error-correction code may be configured to protect the embedded data against errors introduced to the embedded data when the data is extracted from the virtual object. Using the error-correction code may include supplementing the data with redundant bits configured to enable the data to be recovered if there are data transmission errors. For example, the error correcting code may be a cyclic error-correcting code such as the Bose-Chaudhuri-Hocquenghem codes (BCH codes).

In some examples, the error-correction code used to encode the data may be an error and deletion correction code. The deletion correction code may be configured to supplement the data to be embedded with supplementary data, the supplementary data being configured to enable detection and recovery of missing data. For example, the deletion correction code may comprise an Optimal k-Deletion Correcting Codes as discussed in [1][1]. In a further example, the deletion correction code may be a Reed Solomon code. Encoding the data using a deletion correction code may increase the reliability of extracting the embedded data from the virtual object later. For example, if only a subset of the vertices of the mesh of polygons are extracted from the adjusted virtual object then the deletion correction code can be used to detect and/or compensate for the missing data. Therefore, the original message may still be constructed even if some of the embedded data is lost.

[1] https://arxiv.org/pdf/1910.12247.pdf

The error correction code may be configured to implement a large correction threshold. For example, a linear binary code may have parameters [n,k,d] where: n is the bitlength of the codeword, k is the bitlength of the original encoded symbol (k < n) and d is the minimum bit-distance between codewords. The correction threshold may be defined according to the bit-distance, d, where, in general, a code can correct up to (d-1)/2 errors, rounded down. According to the Singleton Bound (e.g., as discussed in [2][2]), d <= n - k + 1. Therefore, a large correction threshold may be achieved by selecting a code having a large n and small k. Similarly, an error and deletion correction code may be configured to implement a large deletion threshold. A Singleton Bound may be defined for error deletion codes as discussed in, e.g., [3][3].

[2] https://en.wikipedia.org/wiki/Singleton_bound

[3] http://www.cs.cmu.edu/~venkatg/teaching/au18-coding-theory/lec-scribes/insdel-coding.pdf

Encoding the data may comprise converting the data to an encoded bitstring, wherein the encoded bitstring is longer than the data. The encoded bitstring may have a number of bits which corresponds to the amount of information which may be embedded in the spatial adjustments. Therefore, the encoded bitstring may have a number of bits corresponding to the number of vertices in the polygon mesh multiplied by the maximum threshold size for the spatial adjustments. Accordingly, the encoded data may be used to calculate spatial adjustments for every vertex of the virtual object thus increasing the reliability of the data extraction later even if the virtual object is reformatted or exported. In other examples, e.g., as described below, the method may include applying spatial adjustments to one or more subsets of the vertices of the virtual object.

In some examples, the computer implemented method may comprise encrypting the data and encoding the data according to the above description.

In some examples, respective spatial adjustments may be applied to a subset of the vertices of the mesh of polygons. Therefore, in some examples, the data may be embedded multiple times in the virtual object.

For example, determining the respective set of spatial adjustments may comprise: selecting a first subset of the vertices of the virtual object, the first subset consisting of the plurality of the vertices. The spatial adjustments may be a first set of spatial adjustments for the first subset of vertices. In this case, adjusting the initial coordinates of the plurality of the vertices may comprise: using the first set of spatial adjustments to adjust the initial coordinates of the selected first subset of vertices.

By embedding the data in a subset of the vertices, the data may be selectively embedded in a visible or more easily retrievable part of the polygon mesh forming the virtual object. For example, by embedding the data in a more textured part of the virtual object, the polygon mesh may be more accurately reconstructed later thus increasing the reliability of the method of embedding data. Additionally, embedding the data in a subset of the vertices enables the data to be embedded multiple times in the virtual object thereby increasing the reliability of the data transmission.

Selecting the first subset of the vertices may comprise: selecting vertices visible from one of six orthogonal viewing directions of the virtual object. Therefore, if an object is transferred between environments and displayed e.g., as a 2D graphic image from a single view, then all or most of the embedded data may still be extracted from that single view.

The six orthogonal viewing directions may be six viewing perspectives of the object along perpendicular axes. Therefore, the six orthogonal viewing directions may correspond to the six faces of a cube. Accordingly, the six viewing perspectives may be referred to as a top view, a bottom view and the four side views of the virtual object.

As mentioned above, the data may be embedded multiple times in the virtual object. For example, the computer implemented method may further comprise: selecting a second subset of vertices comprising a plurality of the remaining vertices which are non-overlapping with the first subset of vertices. A second set of spatial may be determined for the selected second subset of the vertices, the second set of spatial adjustments corresponding to the data being embedded. The second set of spatial adjustments may be used to adjust the initial coordinates of the selected second subset of vertices such that multiple instances of the data are embedded in the virtual object.

Accordingly, embedding the data in the virtual object multiple times provides an increased level of data redundancy thus making the communication of the embedded data more reliable.

In some examples, a plurality of sets of spatial adjustments may be applied to the virtual objects. For example, the computer implemented method may comprise: selecting a plurality of non-overlapping subsets of vertices of the virtual object comprising a plurality of the remaining vertices which are non-overlapping with the first subset of vertices. Then, for each subset of non-overlapping vertices: a respective set of spatial adjustments for the subset of vertices may be determined wherein the respective set of spatial adjustments corresponds to the data being embedded. The respective set of spatial adjustments may be used to modify the initial coordinates of the selected subset of vertices such that multiple instances of the data are embedded in the virtual object.

The data may be embedded in the virtual object six times, corresponding to the six orthogonal views of the virtual object. In other words, the plurality of non-overlapping subsets of vertices of the virtual object may comprise six subsets of vertices. Each of the six non-overlapping subsets of vertices may comprise a plurality of vertices which are viewable from a respective viewing direction of six orthogonal viewing directions of the virtual object.

In a second aspect of the present invention there is provided: a computer implemented method of extracting embedded data from a virtual object,

the virtual object being generated from a mesh of polygons, the polygons comprising edges meeting at vertices, each of the vertices being represented by initial coordinates in 3D space, and the data being embedded according to the method of any preceding claim, the method comprising: receiving adjusted coordinates for at least some of the vertices of the virtual object; comparing the adjusted coordinates to a known baseline for the virtual object and using the comparison to determine spatial adjustments applied to the adjusted coordinates,
extracting the embedded data from the spatial adjustments.

The computer-implemented method of extracting embedded data from a virtual object may be executed by recipients of the virtual object who wish to check for embedded data in the virtual object.

For example, if the embedded data is not encrypted then any party with access to the known baseline for the virtual object may extract the embedded data. This may be useful in examples where the embedded data contains a string or watermark containing information about the virtual object. For example, the embedded data may comprise a string specifying that the virtual object is protected by copyright or a string specifying who the designer of the virtual object is. In these scenarios, the known baseline for the virtual object may be publicly available.

In other examples, when the embedded data is encrypted, then recipients of the virtual object may extract data from the virtual object, however, the extracted data would appear as a random bit string. Only recipients of the virtual object with access to the decryption key may decrypt the random bit string to access the embedded data in a readable format. This may be useful for embedding hidden watermarks or embedding covert information in the virtual object and recipients extracting the embedded data may verify if the virtual object is authentic or if the virtual object has been tampered with. For example, recipients with access to the decryption key may be the owner of the virtual object, or a copyright lawyer, or any other trusted party or software (e.g., a plug-in, etc) who has access to the decryption key.

Receiving adjusted coordinates of the vertices may include extracting the adjusted coordinates from a digital copy of the virtual object wherein the digital copy comprises the adjusted coordinates. For example, the virtual object may be stored in a digital form in which the coordinate of the vertices of the mesh of polygons is stored in memory. Therefore, the adjusted coordinates may be available as part of a digital data packet comprising the virtual object.

In other examples, receiving the adjusted coordinates may include extracting or estimating the adjusted coordinates from the adjusted virtual object. Therefore the computer implemented method may comprise reconstructing a mesh of polygons representing a virtual object, the polygons comprising edges meeting at vertices. The mesh of polygons may be estimated from a graphical rendering of the virtual object. For examples, the method may comprise analysing surface texture and/or lighting incident on the rendered virtual object to approximate a wire frame of the virtual object (the wire frame being another term for the edges of the polygons forming the mesh of polygons). In some examples, the mesh of polygons may be estimated from the outline of the rendered virtual object.

In some examples, the coordinates of the vertices may be extracted or estimated from a 2D graphical image of the virtual object. Therefore, in this example a subset of the coordinates of the vertices of the mesh may be extracted from the virtual object, the subset of the vertices representing the polygons which are visible from one view of the virtual object.

Comparing the adjusted coordinates to a known baseline may comprise determining the difference (i.e., the Euclidian distance) between the adjusted coordinates and the original coordinates to obtain the magnitude of the spatial adjustment. Therefore, in this example the known baseline may be the original (reference) virtual object prior to the data being embedded. For example, the reference object may have vertices with specific coordinates, or vertices that are configured to snap to a predefined grid. When there is a predefined grid, data may be embedded in the virtual object as described above by perturbing the vertexes away from the predefined grid. Therefore, in some examples, the known baseline may comprise a grid which was used to construct the virtual object. The extracted vertices may be compared to the vertices of the grid to estimate the spatial adjustments.

The estimated or recovered spatial adjustments may be vectors, the vectors representing the difference between the virtual object comprising embedded data and the known baseline. Therefore, the vectors may indicate the magnitude and the direction of the spatial adjustment applied to the vertices of the virtual object.

The vectors representing the spatial adjustments may be parsed as numbers. The numbers may be represented as binary strings (using, e.g., standard a computer representation for floating point arithmetic. For example, each vector may be represented as a 64-bit string). The computer implemented method may comprise concatenating the strings together to form a single long string. The strings may be concatenated using a standard ordering to form the single, long string (for example, the single long string may start from a top-right portion of the virtual object and go to a bottom-left portion of the virtual object, or the string may have an order comprising first x-coordinates and then y-coordinates etc).

The computer implemented method may comprise decoding the embedded data. For example, decoding the embedded data may comprises using an error correction code (or an error-deletion code) to reconstruct missing or incorrect data. The error correction code may be applied to the single long string. The result may be a shorter string wherein redundant bits are removed from the string using the error correction code.

The computer implemented method may comprise decrypting the embedded data. This may include using a private key or a symmetrical key to decrypt the embedded data. If the data was encrypted and encoded, then the extracted data may be decoded first and then decrypted afterwards in order to extract the original data that was embedded in the virtual object.

In a third aspect of the present invention there is provided a virtual object, the virtual object being generated from a mesh of polygons, the polygons comprising edges meeting at vertices, each of the vertices being represented by initial coordinates in 3D space, wherein the virtual object comprises data embedded according to the method of the first aspect.

In a fourth aspect of the present invention there is provided a system for embedding data in a virtual object, the virtual object being generated from a mesh of polygons, the polygons comprising edges meeting at vertices, each of the vertices being represented by initial coordinates in 3D space, wherein the system comprises a data input module, and an object editing module wherein:

the data input module is configured to:

receive the initial coordinates of the vertices of the virtual object, and
receive the data to be embedded in the virtual object; and

the object editing module is configured to:

determine a respective set of spatial adjustments for the initial coordinates of a plurality of the vertices, the set of spatial adjustments corresponding to the data being embedded; and adjust the initial coordinates of the plurality of the vertices by the respective set of spatial adjustments, to generate adjusted coordinates of the vertices.

In a fifth aspect of the present invention there is provided a system for extracting embedded data from a virtual object,

the virtual object being generated from a mesh of polygons, the polygons comprising edges meeting at vertices, each of the vertices being represented by initial coordinates in 3D space, and
the data being embedded in the virtual object according to the first aspect, wherein
the system comprises a vertex extraction module, a data extraction module and a data processing module wherein: the vertex extraction module is configured to extract coordinates of at least some of the vertices of the virtual object;
the data extraction module extraction module is configured to compare the adjusted coordinates to a known baseline for the virtual object and use the comparison to extract spatial adjustments applied to the adjusted coordinates, the spatial adjustments corresponding to the embedded data; and
the data processing module is configured to derive the embedded data from the extracted spatial adjustments.

Additional aspects of the invention may relate to systems configured to execute the computer-implemented method of the first or second aspects of the invention. Specifically, the system may comprise a processor which is configured to execute the respective computer-implemented methods of the first or second aspects of the invention.

Additional aspects of the invention may provide a computer program comprising instructions which, when the program is executed by a computer, cause the computer to carry out the steps of a computer-implemented method of any one of the first or second aspects of the present invention. Further aspects of the invention may provide a computer-readable storage medium, having stored thereon the computer program of the previous aspects of the invention.

A further aspect may comprise a computer readable medium having stored thereon the virtual object of the third aspect.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:

> **Figs. 1a-1b** shows a virtual object formed from a mesh of polygons;

> **Fig. 2** shows an example of spatial adjustments being applied to the vertices of a polygon;

> **Fig. 3** shows a system which may be configured to execute a computer-implemented method according to one or more aspects of the present invention;

> **Fig. 4** shows an exemplary process for embedding data in a virtual object;

> **Fig. 5** shows a system which may be configured to execute a computer-implemented method according to one or more aspects of the present invention; and

> **Fig. 6** shows an exemplary process for extracting embedded data from a virtual object.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

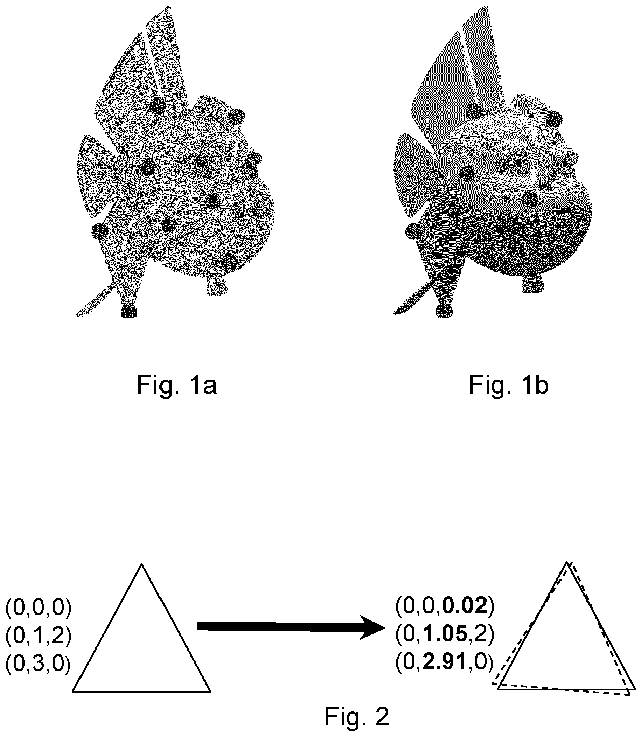

Fig. 1a shows a virtual object which is a 3D model formed from a mesh of polygons. In this example, each polygon is a quadrilateral having four vertices connected by four edges.

Fig. 1b shows the virtual object as rendered by a graphics engine so that the mesh of polygons is not visible.

The present disclosure relates to a procedure for embedding hidden information (for example watermarking information) within small variations to the 3D coordinates of the vertices of the polygons forming the virtual object. For example, a proprietor of the virtual object may wish to embed hidden watermarking information in the object to help enforce copyright protection of the object.

In the examples described herein, every vertex used to define the virtual object is defined using a 3-coordinate (x,y,z) point in space. However, other coordinate systems may be possible.

For example, Fig. 2 shows a triangle which could form part of a mesh of polygons. The triangle can be defined by three vertices having the following coordinates:

(0, 0, 0)

(0, 1, 2)

(0, 3, 0)

The present disclosure is directed to embedding data in the virtual object using small spatial perturbations to the coordinates which define the mesh of polygons. For example, in Fig. 2 small spatial perturbations have been applied to the triangle such that the adjusted coordinates are:

(0, 0, 0.02)

(0.00, 1.05, 2)

(0, 2.91, 0)

The spatial perturbations are ideally small enough that the change to the appearance of the object is indistinguishable to the human eye. Accordingly, these small spatial perturbations can be used to robustly embed information in a virtual object in a way that is undetectable and immune to format changes if the virtual object is shared outside of its original environment.

For example, the data to be embedded may be a bitstring which is N bits long. The virtual object may comprise M vertices having coordinates which may be adjusted according to the data being embedded.

The magnitude of the spatial adjustments for embedding the data is limited to an "acceptable" error threshold E (epsilon) wherein E is measured in bits. Each vertex of the virtual object can be translated in space by plus or minus E in any three directions without affecting user experience or the functionality of the virtual object. Depending on how the host environment encodes vertex information, this means that every vertex can carry up to E bits of extra information (i.e., the least significant bits in the binary representation of the coordinates). Therefore, a total number of bits of data that may be accommodated in the virtual object is given by:

$$Total\ number\ of\ bits = EM$$

The following description relates to devices and procedures for embedding data in a virtual object according to the above theory.

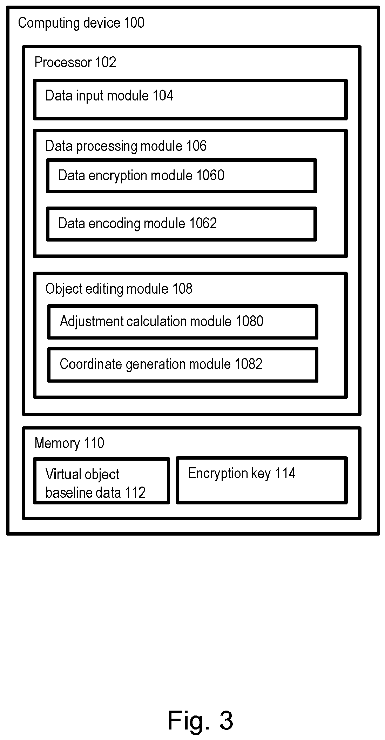

Fig. 3 shows a computing device 100 which is configured to embed data in a virtual object according to some aspects of the present invention.

The computing device 100 may be any suitable computing device which may be used for receiving and editing 3D models. For example, the computing device 100 may be, or comprise, one or more of the following: a desktop computer, a laptop computer, a tablet, a smartphone, a server. Of course, computing device 100 may include other suitable computing devices. The previous list is not intended to be exhaustive. The computing system 100 includes a processor 102 and a memory 104. In the example shown, the processor 102 and the memory 104 are part of the same computing system 100, but it will be appreciated that they may be located on separate physical components without deviating from the scope of the invention.

The processor 102 comprises several different modules. Herein, the term "module" is used to refer to a functional module which is configured or adapted to execute a particular function. The modules may be implemented in hardware (i.e. they may be separate physical components within a computer), in software (i.e. they may represent separate sections of code, which when executed by processor 102, cause it to perform a particular function), or in a combination of both.

The processor 102 comprises a data input module 104, a data processing module 106 and an object editing module. Broadly, the purpose of the data input module 104, the data processing module 106, and the object editing module is to receive a virtual object (i.e., a 3D model) and embed hidden data in the virtual object by editing the coordinates of vertices describing the virtual object.

The data input module 104 is configured to receive the initial coordinates of the vertices of the virtual object. The data input module 104 also receives the data to be embedded in the virtual object.

The data processing module 106 comprises a data encryption module 1060 for optionally encrypting the data to be embedded. Additionally, the data processing module 106 comprises a data encoding module 1062 for encoding the data into a format which can be embedded in the virtual object.

The object editing module 108 comprises an adjustment calculation module 1080 for determining a respective set of spatial adjustments for the initial coordinates which corresponds to the data being embedded. The object editing module 108 also comprises a coordinate generation module 1082 which is configured to edit the virtual object by generating adjusted coordinates of the vertices which have been adjusted by the spatial coordinates.

The memory comprises virtual object baseline data for later use to extract the embedded data from the adjusted virtual object later. Additionally, a key pair comprising a private key and a public key is provided for encrypting the data. Note, in some examples a symmetric key may be used to encrypt the data.

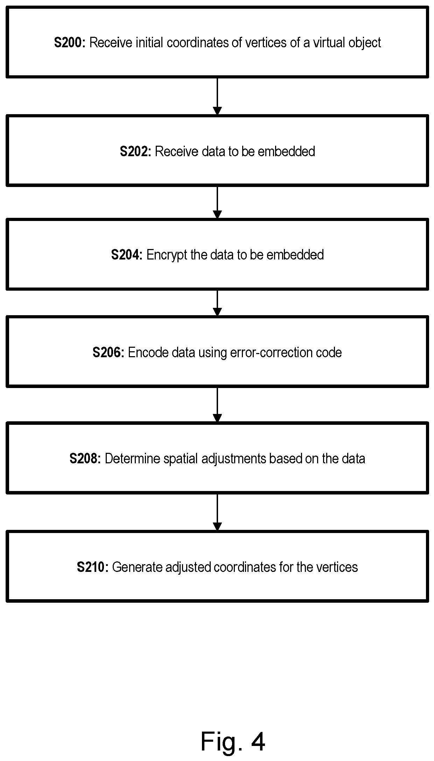

The purpose of each of the data input, data processing, and object editing module 108 is described in further detail below with reference to Fig. 4.

Fig. 4 shows an exemplary process for embedding data in a virtual object.

In step S200 the data input module 104 receives initial coordinates for the vertices of the virtual object. The vertices are the vertices which connect the edges of polygons within a mesh of polygons for generating the virtual object.

The initial coordinates of the vertices may be provided to the data input module 104 as a data array describing the virtual object. For example, a source of the virtual object may provide the virtual object for editing in a form defined by a polygon mesh. However, in other examples, the data input module 104 may be configured to receive a virtual object in a digital format which does not contain vertices. In this case the data input module 104 may generate a mesh of polygons from the virtual object (e.g., using a 3D wire frame generator) and extract the initial coordinates of the vertices from the generated mesh.

In step S202 the data input module 104 receives the data to be embedded in the virtual object.

The data may be received from an external source such as from an owner of the virtual object. In other examples, the data may be retrieved from memory.

For example, the data may be a bitstring describing watermarking information (e.g., author name, context id, etc) for embedding in the virtual object. In other examples, the data may be a message to be embedded in the virtual object for securely communicating within an environment.

In step S204 the data processing module 106 optionally encrypts the data to be embedded. By encrypting the data a bit string of apparently random bits is created.

For example, the bitstring describing watermarking information may be augmented by a cryptographic authentication layer (HMAC, signature, etc) and encrypted to appear as random bits. The data may be encrypted using any suitable encryption scheme. For example, symmetric encryption such as AES may be used to encrypt the data. The encryption key for encrypting and decrypting the data is stored in memory.

The resulting encrypted data is a bit string comprising N bits.

In step S206 the data processing module 106 encodes the data to be embedded using an error correction code. The result is a much larger bit string comprising C bits.

In one example, the data may be encoded using an error and deletion correction code to produce the bit string comprising C bits. The bit string may then be distributed (in the following step S206) across the entire set of M vertices forming the virtual object. Therefore, in this example, the number of bits C able to be embedded in the virtual object is given by:

$$C = EM$$

where M is the number of vertices of the virtual object, and Epsilon E is the maximum perturbation which can be applied to the coordinates of the vertices in bits.

Since, C is generally much larger than N, the error and deletion correction code may be configured to implement a large deletion threshold. Therefore, even if only some vertices are recoverable later, (e.g., if only a screenshot or video of the virtual object is available), the original data may still be recovered owing to the error and deletion correction encoding of the data. For example, the error and deletion correction encoding may be implemented using Optimal k-Deletion Correcting Codes or Reed Solomon codes.

In an alternative example, the data processing module 106 may be configured to encode the data using an error correction code, to produce a bit string comprising C bits wherein C is smaller than the number of vertices forming the virtual object M. Ideally, C is configured to be several times smaller than M so that the data can be embedded in the virtual object several times. Therefore, in this example, a smaller amount error correction is possible compared to the previous example, but the data is embedded in the virtual object multiple times.

If the data is embedded in the vertices of each of six orthogonal views of the virtual object (i.e., the viewing directions corresponding to the six faces of a cube) then the likelihood of most of the N bits of data being recovered is improved. Therefore, in this example, the number of bits C able to be embedded in the virtual object is given by

$$C = E\frac{M}{6}$$

where M is the number of vertices of the virtual object, and Epsilon E is the maximum perturbation which can be applied to the coordinates of the vertices in bits.

Since C is usually much larger than N there are available bits for expanding the N bitstring into a larger C bitstring using an error-correction code. For example, the data encoding module 1062 may encode the data using a linear BCH code. Therefore, in this example, the encoded data may be embedded in the virtual object six times as described in the following steps S208 to S210.Select, for every 6 directions of view of the object, M/6 vertexes visible from that direction, and will embed the C bitstring in those vertexes as described above.

In step S208 the adjustment calculation module 1080 determines a respective set of spatial adjustments for the initial coordinates. The set of spatial adjustments are configured to correspond to the data being embedded.

The magnitude of the spatial adjustment is limited by a maximum threshold spatial adjustment so that the adjustments to the virtual object are not noticeable to users or to environments hosting the virtual object.

Each spatial adjustment corresponds to one or more bits of the encoded bit string, C. For example, if the maximum threshold perturbation which can be applied to the coordinates of the virtual object corresponds to the least significant bit (LSB) of the coordinates (when represented in binary) then each spatial adjustment may correspond to one bit of the encoded bit string C. Of course, if the maximum threshold perturbation is larger than one bit then more information may be embedded in each spatial adjustment.

The spatial adjustments may be calculated for some or all of the dimensions of the coordinates of the virtual object.

The adjustment calculation module 1080 may be configured to calculate spatial adjustments for all or most of the M vertices of the virtual object. As mentioned above, this may be the case when the data is encoded using an error and deletion correction code with a large deletion threshold owing to the large number of extra bits available for the encoding.

In other examples, the adjustment calculation module 1080 may be configured to select a first subset of the vertices M of the virtual object and calculate a first set of spatial adjustments for the first subset of the vertices. The adjustment calculation module 1080 may then select one or more additional subsets of the vertices M of the virtual object and calculate additional sets of spatial adjustments for the additional subsets of the vertices. Each set of spatial adjustments is based on the same encoded bit string C.

As mentioned above, the adjustment calculation module 1080 may be configured to select the subsets of vertices corresponding to the vertices visible from each of six orthogonal views of the virtual object. Therefore, the embedded data may be more likely to be fully extractable from any view of the virtual object. However, any number of subsets of vertices and respective sets of spatial adjustments may be calculated depending on the number of vertices and the amount of data to be embedded.

In step 210 the coordinate generation module 1082 generates adjusted coordinates for the vertices of the virtual object. The adjusted coordinates are calculated by adjusting the initial coordinates by the respective set of spatial adjustments. For example, the calculated spatial adjustments may be added to or subtracted from the initial coordinates of the virtual object.

In some examples, the object editing module 108 may be configured to render the virtual object based on a mesh of polygons having the adjusted coordinates for the vertices. The virtual object may then be returned to the owner of the virtual object, or to the original environment or sent on to an intended recipient.

Data containing the initial coordinates of the vertices is stored as a baseline 114 for extracting the embedded data later. In some examples, the baseline data may be publicly available to recipients of the virtual object who wish to extract the embedded data. In other examples, the baseline data may be stored privately for use by trusted parties who wish to extract the embedded data or verify the virtual object.

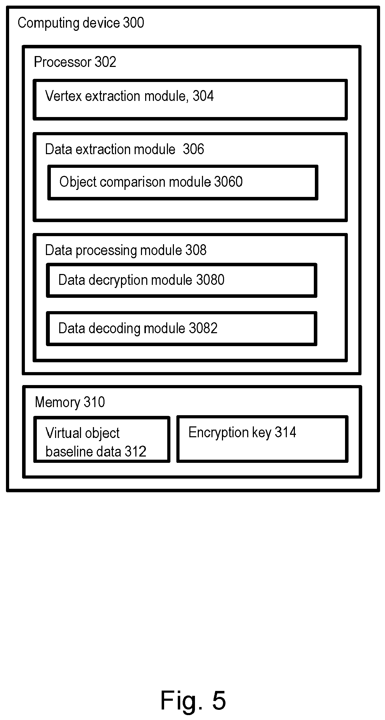

Fig. 5 shows a computing device 300 which is configured to extract embedded data from a virtual object according to some aspects of the present invention.

In some examples, the same computing device for embedding the data (the source) in the object may be used to extract the embedded data. Alternatively, the data may be extracted by a recipient of the virtual object which was not the source of the virtual object.

As in Fig. 3 the computing system includes a processor and a memory. The processor comprises a vertex extraction module 304, a data extraction module 306, and a data processing module 308.

The memory 310 comprises virtual object baseline data 312 for comparing to the adjusted virtual object in order to extract the embedded data from the adjusted virtual object. Additionally an encryption key 214 is provided for optionally decrypting the extracted data.

Broadly, the purpose of the vertex extraction module 304, the data extraction module 306, and the data processing module 308 is to receive a virtual object (i.e., a 3D model) and extract embedded data from the virtual object. As above, the virtual object is generated from a mesh of polygons, the polygons comprising edges meeting at vertices. Each of the vertices is represented by coordinates in 3D space. In this example, the coordinates of the vertices have been adjusted according to data which is embedded in the virtual object.

The vertex extraction module 304 is configured to receive the virtual object and extract at least some of the adjusted coordinates of the vertices of the virtual object.

The data extraction module 306 comprises an object comparison module which is configured to compare the adjusted coordinates of the vertices to the known baseline data for the virtual object. The comparison is used to determine the magnitude of spatial adjustments which were applied to the initial coordinates of the vertices. The extracted spatial adjustments correspond to the embedded data which is being extracted.

The data processing module 308 comprises a data decryption module and a data decoding module for converting the extracted spatial adjustments to data which is in a readable format. The data decryption module 3080 is configured to optionally decrypt the extracted data. A data decoding module 3082 is configured to decode the extracted data by converting the data from an embedded format to a readable format. For example, after decoding, the data may be a plain text string comprising e.g., a message, watermarking information, or an identifier.

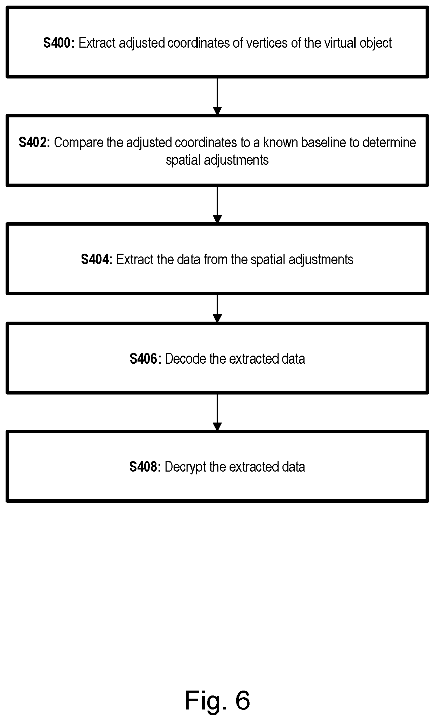

The operations of the vertex extraction module 304, the data extraction module 306, and the data processing module 308 are described further below with reference to Fig. 6.

Fig. 6 shows an exemplary process for extracting embedded data from a virtual object according to aspects of the present invention.

In step S400 the vertex extraction module 304 receives the adjusted virtual object comprising embedded data and extracts at least some of the adjusted coordinates of the virtual object.

The virtual object may be provided in a digital format which contains vertex coordinates. Therefore, extracting the adjusted coordinate may involve retrieving the coordinates from the digital data packet containing the virtual object.

In some examples, the virtual object may be provided in a digital format which does not comprise coordinates of the vertices. Therefore, extracting the adjusted coordinates may comprise constructing a polygon mesh for the virtual object and extracting the vertices of the polygon mesh. For example, the virtual object may be provided as a model based definition (MBD) CAD file such as STEP, QIF, JT, or as a non-MBD CAD file such as a 3D PDF, IGES, GLB etc.

In other examples, the virtual object may be a digital copy of the virtual object which is a screenshot or a video recording of the virtual object. Therefore, extracting the adjusted coordinates may comprise performing image analysis on the copy of the virtual object and constructing a polygon mesh describing the virtual object. Accordingly, in this example, only some of the vertices of the virtual object may be extracted.

In step S402 the object comparison module 3060 compares the adjusted coordinates to a known baseline for the virtual object. For example, the known baseline 312 may be a copy of the original virtual object or an array of initial coordinates of the vertices of the virtual object from before the data was embedded in the virtual object. In other examples, a platform or virtual environment provider may offer a way to restrict the "original" virtual objects to vertices on a (fine-grained) "snapping" grid. Therefore, in this example, the baseline data 312 may comprise a baseline coordinate for each vertex of the virtual object which is the grid point closest to that vertex. As mentioned above, the known baseline 312 may be publicly available (for example, a luxury car which has a publicly known CAD diagram) or privately available to owners of the virtual object or to trusted parties.

To compare the initial coordinates and the adjusted coordinates, the value for each dimension of the adjusted coordinates and the initial coordinates are subtracted from each other to give a magnitude of the spatial adjustments in each dimension for each vertex that was extracted from the virtual object.

In step S404 the data extraction module 306 extracts the embedded data from the extracted spatial coordinates. The embedded data in this step may be a bit string of length C bits. Each bit (or subset of bits) may correspond to the magnitude of each spatial adjustment. For example, each spatial adjustment may be translated to one or more bits of the bit string depending on how many bits were allocated to each adjustment in the data embedding process.

The number of C bits of the extracted data may correspond to the number of vertices that were extracted in step S400. For example, if only some of the vertices were extracted, then the extracted data may be incomplete.

In some examples, the extracted spatial adjustments may be represented as vectors, the vectors representing the magnitude and direction of the spatial adjustment applied to the vertices of the virtual object. The vectors representing the spatial adjustments may be parsed as numbers which are represented as binary bitstrings (e.g., using a standard computer representation for floating point arithmetic. For example, each vector may be represented as a 64-bit string).

The bitstrings representing the vectors may be concatenated together to form a single long bitstring (having length C) which represents the embedded data. The strings may be concatenated using a standard ordering to form the single, long string (for example, the single, long string may start from a top-right portion of the virtual object and go to a bottom-left portion of the virtual object, or the string may have an order comprising first x-coordinates and then y-coordinates etc).

In some examples, where the data was embedded in the virtual object multiple times, the data extraction module 306 may be configured to detect repetitions of the data and remove repeated sequences from the extracted data. However, in some examples, this may be performed later, e.g., after the data has been decrypted or decoded.

In step S408 the data decoding module 3082 decodes the extracted data.

For example, where the data was encoded using an error correction code, the error correction code may be used to detect and remove errors in the extracted data. Additionally, where the data was encoded using a deletion correction code, the deletion correction code may be used to detect missing data and reconstruct the missing data. This is useful when only a subset of the vertices of the virtual object were extracted in step S400.

The extracted data bit string of C bits is therefore translated to a much shorter bit string of N bits corresponding to the original data message. In some examples, the bit string of N bits may be encrypted and comprise a sequence of apparently random numbers (cyphertext).

In step S410, if the embedded data was encrypted, then the data decryption module 3080 optionally decrypts the extracted and decoded data using an encryption key 314. For example, if the data was encrypted using AES then the encryption key 314 may be a 128 bit, 192 bit, or 256 bit symmetric key. The encryption key 314 is used to transform the sequence of apparently random numbers to the original message.

For example, the original message may contain covert communications for the intended recipient of the virtual object. In other examples, the original message may contain watermarking information for authenticating the virtual object. Accordingly, by embedding data in virtual objects and extracting the data according to the above procedures a covert communication channel is provided in virtual environments for transmitting hidden data and applying hidden watermarks.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### References

A number of publications are cited above in order to more fully describe and disclose the invention and the state of the art to which the invention pertains. Full citations for these references are provided below. The entirety of each of these references is incorporated herein.

1. https://arxiv.org/pdf/1910.12247.pdf

2. https://en.wikipedia.org/wiki/Singleton_bound

3. http://www.cs.cmu.edu/~venkatg/teaching/au18-coding-theory/lec-scribes/insdel-coding.pdf

### Claims

1. A computer-implemented method of embedding data in a virtual object, the virtual object being generated from a mesh of polygons, the polygons comprising edges meeting at vertices, each of the vertices being represented by initial coordinates in 3D space, wherein the computer-implemented method comprises:

   receiving the initial coordinates of the vertices of the virtual object;
   receiving the data to be embedded in the virtual object;
   determining a respective set of spatial adjustments for the initial coordinates of a plurality of the vertices, the set of spatial adjustments corresponding to the data being embedded; and
   adjusting the initial coordinates of the plurality of the vertices by the respective set of spatial adjustments, to generate adjusted coordinates of the vertices.

2. A computer-implemented method according to claim 1, further comprising: rendering the virtual object according to the adjusted coordinates of the vertices.

3. The computer implemented method of any preceding claim wherein the data includes a unique identifier corresponding to the virtual object.

4. The computer implemented method of any preceding claim wherein the spatial adjustments are smaller than a predetermined threshold.

5. The computer implemented method of any preceding claim further comprising: encrypting the data to be embedded.

6. The computer implemented method of any preceding claim further comprising: encoding the data using an error-correction code.

7. The computer implemented method of claim 6 wherein the error correction code is configured to implement a large deletion threshold.

8. The computer implemented method of any preceding claim wherein:

   determining the respective set of spatial adjustments comprises:

   selecting a first subset of the vertices of the virtual object, the first subset consisting of the plurality of the vertices, and determining a first set of spatial adjustments for the first subset of the vertices; and

   adjusting the initial coordinates of the plurality of the vertices comprises:
   using the first set of spatial adjustments to adjust the initial coordinates of the selected first subset of vertices.

9. The computer implemented method of claim 8 wherein selecting the first subset of the vertices comprises:
   selecting vertices visible from one of six orthogonal viewing directions of the virtual object.

10. The computer implemented method claims 8 or 9, comprising:

    selecting a second subset of vertices comprising a plurality of the remaining vertices which are non-overlapping with the first subset of vertices;
    determining a respective second set of spatial adjustments for the selected second subset of the vertices, the second set of spatial adjustments corresponding to the data being embedded, and
    using the second set of spatial adjustments to adjust the initial coordinates of the selected second subset of vertices such that multiple instances of the data are embedded in the virtual object.

11. The computer-implemented method of any of claims 8 to 10, further comprising:

selecting a plurality of non-overlapping subsets of vertices of the virtual object comprising a plurality of the remaining vertices which are non-overlapping with the first subset of vertices;
for each subset of non-overlapping vertices:

determining a respective set of spatial adjustments for the subset of vertices, the respective set of spatial adjustments corresponding to the data being embedded; and using the respective set of spatial adjustments to modify the initial coordinates of the selected subset of vertices,

such that multiple instances of the data are embedded in the virtual object.

12. The computer-implemented method of claim 11 wherein:

the plurality of non-overlapping subsets of vertices of the virtual object comprises six subsets, wherein
each of the six non-overlapping subset of vertices comprises a plurality of vertices viewable from a respective viewing direction of six orthogonal viewing directions of the virtual object.

13. A computer implemented method of extracting embedded data from a virtual object,

the virtual object being generated from a mesh of polygons, the polygons comprising edges meeting at vertices, each of the vertices being represented by initial coordinates in 3D space, and
the data being embedded according to the method of any preceding claim, the method comprising: receiving adjusted coordinates of at least some of the vertices of the virtual object;
comparing the adjusted coordinates to a known baseline for the virtual object and using the comparison to determine spatial adjustments applied to the adjusted coordinates,
extracting the embedded data from the spatial adjustments.

14. A computer program product comprising instructions which when executed by a computer cause the computer to perform the computer implemented method of any preceding claim.

15. A computer-readable storage medium, having stored thereon the computer program of claim 14.

EP 4 462 348 A1

Fig. 1a

Fig. 1b

(0,0,0)
(0,1,2)
(0,3,0)

(0,0,**0.02**)
(0,**1.05**,2)
(0,**2.91**,0)

Fig. 2

15

Fig. 3

S200: Receive initial coordinates of vertices of a virtual object

↓

S202: Receive data to be embedded

↓

S204: Encrypt the data to be embedded

↓

S206: Encode data using error-correction code

↓

S208: Determine spatial adjustments based on the data

↓

S210: Generate adjusted coordinates for the vertices

Fig. 4

Computing device 300

Processor 302

Vertex extraction module, 304

Data extraction module 306

Object comparison module 3060

Data processing module 308

Data decryption module 3080

Data decoding module 3082

Memory 310

Virtual object baseline data 312

Encryption key 314

Fig. 5

S400: Extract adjusted coordinates of vertices of the virtual object

S402: Compare the adjusted coordinates to a known baseline to determine spatial adjustments

S404: Extract the data from the spatial adjustments

S406: Decode the extracted data

S408: Decrypt the extracted data

Fig. 6

Europäisches
Patentamt

European
Patent Office

Office européen
des brevets

**EUROPEAN SEARCH REPORT**

Application Number

EP 23 17 2394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASHOURIAN M ET AL: "A new masking method for spatial domain watermarking of three-dimensional triangle meshes", IEEE TENCON 2003. CONFERENCE ON CONVERGENT TECHNOLOGIES FOR THE ASIA-PACIFIC REGION. BANGALORE, INDIA, OCT. 15 – 17, 2003; [IEEE REGION 10 ANNUAL CONFERENCE], NEW YORK, NY : IEEE, US, vol. 1, 15 October 2003 (2003-10-15), pages 428-431, XP010687112, DOI: 10.1109/TENCON.2003.1273359 ISBN: 978-0-7803-8162-9 * abstract * * page 428, right-hand column, line 28 – page 429, paragraph 3 * ----- | 1-15 | INV. G06T1/00 G09C5/00 |
| X | HAO-TIAN WU ET AL: "Public Authentication of 3D Mesh Models", PROCEEDINGS OF THE IEEE/WIC/ACM INTERNATIONAL CONFERENCE ON WEB INTELLIGENCE IEEE COMPUT, IEEE, SOC LOS ALAMITOS, CA, USA, 18 December 2006 (2006-12-18), pages 940-948, XP058156855, DOI: 10.1109/WI.2006.140 ISBN: 978-0-7695-2747-5 * abstract * * page 2, right-hand column, last paragraph – page 3, paragraph 3.1 * * page 4, paragraph 3.3 – paragraph 3.4 * ----- | 1-15 | |
| | −/−− | | TECHNICAL FIELDS SEARCHED (IPC) G06T G09C |

The present search report has been drawn up for all claims

| Place of search | Date of completion of the search | Examiner |
|---|---|---|
| Munich | 13 November 2023 | Zamuner, Umberto |

EPO FORM 1503 03.82 (P04C01)

**Europäisches Patentamt**
**European Patent Office**
**Office européen des brevets**

# EUROPEAN SEARCH REPORT

Application Number

EP 23 17 2394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RYUTAROU OHBUCHI ET AL: "Watermaking three-dimensional polygonal models", PROCEEDINGS OF THE FIFTH ACM INTERNATIONAL CONFERENCE ON MULTIMEDIA , MULTIMEDIA '97, 1 January 1997 (1997-01-01), pages 261-272, XP055113400, New York, New York, USA DOI: 10.1145/266180.266377 ISBN: 978-0-89-791991-3 * abstract * * page 2, left-hand column, line 1 – right-hand column, line 1; figure 2 * * page 3, paragraph 2.4 – page 4, paragraph 2.4.1 * * page 5, paragraph 3 – page 6, left-hand column, last line * * page 2, paragraph 2.2 – page 3 * | 1-15 | |
| X | ----- Jihane Bennour ET AL: "3D Object Watermarking" In: "3D Object Processing: Compression, Indexing and Watermarking", 1 June 2008 (2008-06-01), John Wiley & Sons, XP055010035, ISBN: 978-0-47-006542-6 DOI: 10.1002/9780470510773.ch4, | 1,14,15 | |
| A | * page 147, paragraph 4.3.3 * * page 157, paragraph 4.4.3 – page 165, line 21 * ----- | 2-13 | TECHNICAL FIELDS SEARCHED (IPC) |

The present search report has been drawn up for all claims

| Place of search | Date of completion of the search | Examiner |
|---|---|---|
| Munich | 13 November 2023 | Zamuner, Umberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)